# EUROPEAN PATENT APPLICATION

(11) **EP 4 273 788 A1**
(43) Date of publication of application: **08.11.2023**
(21) Application number: 21914608.1
(22) Date of filing: 30.12.2021
(51) Int. Cl.: G06Q 50/30, B60L 50/50, B60S 5/06, B60L 53/80

(54) **OFF-STATION CHARGING CONTROL METHOD AND SYSTEM, ELECTRONIC DEVICE, AND STORAGE MEDIUM**

(30) Priority: 31.12.2020 CN 202011623646
(71) Applicant: Aulton New Energy Automotive Technology Group, Guangzhou, Guangdong 510700 (CN); Shanghai Dianba New Energy Technology Co., Ltd., Shanghai 201308 (CN)
(72) Inventor: YUE, Wenjun, Guangzhou, Guangdong 510700 (CN); CHEN, Lichang, Guangzhou, Guangdong 510700 (CN)
(74) Representative: Bittner, Bernhard
(86) International application number: PCT/CN2021/142978
(87) International publication number: WO 2022/143877

(57) **Abstract**

Disclosed in the present invention are an off-station charging control method and system, an electronic device, and a storage medium. The method comprises: acquiring usage state information of a battery in a battery swapping vehicle; sending the usage state information to a battery swapping server, so that the battery swapping server generates matched off-station charging control information according to the usage state information and feeds back same; and receiving the off-station charging control information, and controlling, according to the off-station charging control information, an off-station charging behavior when the battery is installed on the battery swapping vehicle. According to the off-station charging control method and system, the electronic device, and the storage medium of the present invention, the usage state information of the battery is acquired, the usage state information is uploaded to the battery swapping server, and the off-station charging control information is downloaded from the battery swapping server, so that the off-station charging behavior when the battery is installed on the battery swapping vehicle is controlled, thereby controlling the full life cycle of the battery, and prolonging the service life of the battery.

## Description

The present application claims the priority of Chinese Patent Application No. CN202011623646.7 filed on Dec. 31, 2020, the content of which is incorporated herein by reference in its entirety.

### TECHNICAL FIELD

The present disclosure belongs to the technical field of Internet of vehicles, and particularly relates to an off-station charging control method and system, an electronic device and a storage medium.

### BACKGROUND

The battery swapping technology for new energy vehicles is a high-efficient and controllable energy supplement scheme, and can effectively control the charging rate of batteries in a centralized management mode, so that the cycle life of the batteries is greatly prolonged. However, since the off-station self-charging behavior of the vehicle awaiting battery swapping is not monitored, the battery swapping service providers are difficult to control the charging process of the batteries leaving the battery swapping stations, so that the service life of the vehicle batteries of the new energy vehicles is influenced.

### CONTENT OF THE PRESENT INVENTION

The present disclosure is intended to overcome the defect that the full life cycle of batteries is difficult to control due to the fact that the off-station charging behavior of vehicles cannot be monitored in the prior art, and provides an off-station charging control method and system, an electronic device and a storage medium.

The present disclosure solves the above-mentioned technical problem by the following technical solution:

The present disclosure provides an off-station charging control method of a vehicle awaiting battery swapping, which comprises the following steps:
acquiring use state information of a battery in the vehicle awaiting battery swapping;
sending the use state information to a battery swapping server so as to enable the battery swapping server to generate matched off-station charging control information according to the use state information and to feed the matched off-station charging control information back; and
receiving the off-station charging control information, and controlling, according to the off-station charging control information, an off-station charging behavior when the battery is installed on the vehicle awaiting battery swapping.

According to the solution, the use state information of the battery is acquired, and the use state information is uploaded to the battery swapping server and the off-station charging control information is downloaded from the battery swapping server, so that the off-station charging behavior when the battery is installed on the vehicle awaiting battery swapping is controlled, thereby controlling the full life cycle of the battery, and prolonging the service life of the battery.

Preferably, acquiring the use state information of the battery in the vehicle awaiting battery swapping comprises:
acquiring the use state information of the battery in the vehicle awaiting battery swapping according to a time cycle;
sending the use state information to the battery swapping server so as to enable the battery swapping server to generate the matched off-station charging control information according to the use state information and to feed the matched off-station charging control information back comprises:
sending the use state information to the battery swapping server in real time so as to enable the battery swapping server, when continuously receiving changes in the use state information, to generate the matched off-station charging control information according to the latest received use state information and to feed the matched off-station charging control information back.

According to the solution, the use state information of the battery is periodically acquired and uploaded in real time, so that the off-station charging control information can be updated in time when there are changes in the use state information, thereby guaranteeing the timeliness and effectiveness of the off-station charging control information.

Preferably, the solution is applied to a battery swapping controller, and acquiring the use state information of the battery in the vehicle awaiting battery swapping comprises:
acquiring the use state information of the battery in the vehicle awaiting battery swapping from a battery management system;
receiving the off-station charging control information, and controlling, according to the off-station charging control information, the off-station charging behavior when the battery is installed on the vehicle awaiting battery swapping comprises:
receiving the off-station charging control information and forwarding the off-station charging control information to the battery management system, and controlling, according to the off-station charging control information, the off-station charging behavior when the battery is installed on the vehicle awaiting battery swapping.

In the solution, the battery swapping controller can communicate with the battery management system and the battery swapping server, respectively, so as to further serve as a transfer device for information transmission between the battery management system and the battery swapping server, so that the uploading of the use state information from the battery management system to the battery swapping server and the issuing of the off-station charging control information from the battery swapping server to the battery management system are achieved.

Preferably, receiving the off-station charging control information and forwarding the off-station charging control information to the battery management system, and controlling, according to the off-station charging control information, the off-station charging behavior when the battery is installed on the vehicle awaiting battery swapping comprises:
receiving the off-station charging control information;
generating an off-station charging control instruction according to the off-station charging control information; and
sending the off-station charging control instruction to the battery management system, and triggering the battery management system to execute the off-station charging control instruction so as to control the off-station charging behavior when the battery is installed on the vehicle awaiting battery swapping.

In the solution, the battery swapping controller and the battery swapping server perform data interaction through an agreed network communication protocol; the battery swapping controller, after receiving the off-station charging control information, converts the off-station charging control information into a battery management system-readable off-station control instruction and then sends the off-station control instruction to the battery management system so as to control the battery management system and thus to control the off-station charging behavior.

Preferably, when the off-station charging control information comprises off-station charging permission information, generating the off-station charging control instruction according to the off-station charging control information comprises:
generating an off-station charging permission instruction and an off-station charging parameter setting instruction according to the off-station charging permission information;
sending the off-station charging control instruction to the battery management system, and triggering the battery management system to execute the off-station charging control instruction so as to control the off-station charging behavior when the battery is installed on the vehicle awaiting battery swapping comprises:
sending the off-station charging permission instruction and the off-station charging parameter setting instruction to the battery management system, so as to enable the battery management system to execute the off-station charging permission instruction to permit the off-station charging behavior when the battery is installed on the vehicle awaiting battery swapping, and to execute the off-station charging parameter setting instruction to control the off-station charging behavior.

According to the solution, the off-station charging permission instruction and the off-station charging parameter setting instruction are generated and sent to the battery management system, so that the charging control of the battery management system is achieved, and the effective execution of the instructions is guaranteed.

Preferably, when the off-station charging control information comprises off-station charging prohibition information, generating the off-station charging control instruction according to the off-station charging control information comprises:
generating an off-station charging prohibition instruction according to the off-station charging prohibition information;
sending the off-station charging control instruction to the battery management system, and triggering the battery management system to execute the off-station charging control instruction so as to control the off-station charging behavior when the battery is installed on the vehicle awaiting battery swapping comprises:
sending the off-station charging prohibition instruction to the battery management system so as to enable the battery management system to execute the off-station charging prohibition instruction to prohibit the off-station charging behavior when the battery is installed on the vehicle awaiting battery swapping.

According to the solution, the off-station charging prohibition instruction is generated and sent to the battery management system, so that the charging control of the battery management system is achieved, and the effective execution of the instruction is guaranteed.

The present disclosure further provides an off-station charging control system of a vehicle awaiting battery swapping, which comprises:
an information acquisition module, configured to acquire use state information of a battery in the vehicle awaiting battery swapping;
an information sending module, configured to send the use state information to a battery swapping server so as to enable the battery swapping server to generate matched off-station charging control information according to the use state information and to feed the matched off-station charging control information back; and
an information receiving module, configured to receive the off-station charging control information, and control, according to the off-station charging control information, an off-station charging behavior when the battery is installed on the vehicle awaiting battery swapping.

Preferably, the information acquisition module is configured to:
acquire the use state information of the battery in the vehicle awaiting battery swapping according to a time cycle;
the information sending module is configured to:
send the use state information to the battery swapping server in real time so as to enable the battery swapping server, when continuously receiving changes in the use state information, to generate the matched off-station charging control information according to the latest received use state information and to feed the matched off-station charging control information back.

Preferably, the solution is applied to a battery swapping controller, and the information acquisition module is configured to:
acquire the use state information of the battery in the vehicle awaiting battery swapping from a battery management system;
the information receiving module is configured to:
receive the off-station charging control information and forwarding the off-station charging control information to the battery management system, and control, according to the off-station charging control information, the off-station charging behavior when the battery is installed on the vehicle awaiting battery swapping.

Preferably, receiving the off-station charging control information and forwarding the off-station charging control information to the battery management system, and controlling, according to the off-station charging control information, the off-station charging behavior when the battery is installed on the vehicle awaiting battery swapping comprises:
receiving the off-station charging control information;
generating an off-station charging control instruction according to the off-station charging control information; and
sending the off-station charging control instruction to the battery management system, and triggering the battery management system to execute the off-station charging control instruction so as to control the off-station charging behavior when the battery is installed on the vehicle awaiting battery swapping.

Preferably, when the off-station charging control information comprises off-station charging permission information, generating the off-station charging control instruction according to the off-station charging control information comprises:
generating an off-station charging permission instruction and an off-station charging parameter setting instruction according to the off-station charging permission information;
sending the off-station charging control instruction to the battery management system, and triggering the battery management system to execute the off-station charging control instruction so as to control the off-station charging behavior when the battery is installed on the vehicle awaiting battery swapping comprises:
sending the off-station charging permission instruction and the off-station charging parameter setting instruction to the battery management system, so as to enable the battery management system to execute the off-station charging permission instruction to permit the off-station charging behavior when the battery is installed on the vehicle awaiting battery swapping, and to execute the off-station charging parameter setting instruction to control the off-station charging behavior.

Preferably, when the off-station charging control information comprises off-station charging prohibition information, generating the off-station charging control instruction according to the off-station charging control information comprises:
generating an off-station charging prohibition instruction according to the off-station charging prohibition information;
sending the off-station charging control instruction to the battery management system, and triggering the battery management system to execute the off-station charging control instruction so as to control the off-station charging behavior when the battery is installed on the vehicle awaiting battery swapping comprises:
sending the off-station charging prohibition instruction to the battery management system so as to enable the battery management system to execute the off-station charging prohibition instruction to prohibit the off-station charging behavior when the battery is installed on the vehicle awaiting battery swapping.

The present disclosure further provides an electronic device, which comprises a memory, a processor and a computer program stored on the memory and executable on the processor, the processor, when executing the computer program, implementing the off-station charging control method of a vehicle awaiting battery swapping according to any one of the embodiments described above.

Preferably, the electronic device is a battery swapping controller, and the battery swapping controller is accessed to a vehicle bus network of the vehicle awaiting battery swapping and communicates with a battery management system through the vehicle bus network.

Preferably, the battery swapping controller integrates a wireless communication module, and communicates with the battery swapping server through the wireless communication module.

The present disclosure further provides a computer-readable storage medium having a computer program stored thereon, the computer program, when executed by a processor, implementing the steps of the off-station charging control method of a vehicle awaiting battery swapping according to any one of the embodiments described above.

On the basis of the general knowledge in the art, the above preferred conditions can be combined arbitrarily to obtain preferred embodiments of the present disclosure.

The present disclosure has the following positive and progressive effect: according to the off-station charging control method and system of a vehicle awaiting battery swapping, the electronic device and the storage medium of the present disclosure, the use state information of the battery is acquired, and the use state information is uploaded to the battery swapping server and the off-station charging control information is downloaded from the battery swapping server, so that the off-station charging behavior when the battery is installed on the vehicle awaiting battery swapping is controlled, thereby controlling the full life cycle of the battery, and prolonging the service life of the battery.

### BRIEF DESCRIPTION OF THE DRAWINGS

FIG. 1 is a flowchart of an off-station charging control method of a vehicle awaiting battery swapping according to Embodiment 1 of the present disclosure;
FIG. 2 is a preferred flowchart of the off-station charging control method of a vehicle awaiting battery swapping according to Embodiment 1 of the present disclosure;
FIG. 3 is a specific flowchart of step 131 in Embodiment 1 of the present disclosure;
FIG. 4 is a schematic block diagram of an off-station charging control system of a vehicle awaiting battery swapping according to Embodiment 2 of the present disclosure; and
FIG. 5 is a schematic structural diagram of an electronic device according to Embodiment 3 of the present disclosure.

### DETAILED DESCRIPTION OF THE PREFERRED EMBODIMENT

The present disclosure is further illustrated by the following embodiments, which are not intended to limit the present disclosure.

### Embodiment 1

This embodiment provides an off-station charging control method of a vehicle awaiting battery swapping. The off-station charging refers to charging the vehicle awaiting battery swapping outside the battery swapping station, the battery swapping station is an energy station for providing charging for a power battery of an electric vehicle and for quickly swapping the power battery, and the battery on the vehicle awaiting battery swapping is operated, managed or monitored by the battery swapping station. The battery swapping station herein may be a single independent battery swapping station, or may be a plurality of battery swapping stations managed in a unified manner. In this embodiment, "charging the vehicle awaiting battery swapping outside the battery swapping station" does not specifically mean that the position for charging the vehicle awaiting battery swapping is outside a certain or any number of battery swapping stations, and the situations that charging the vehicle awaiting battery swapping does not consider the charging position, and the vehicle awaiting battery swapping is charged in a non-battery swapping station or charged by using a charging device which is authorized by a non-battery swapping station may also be included. The method of this embodiment can control the off-station charging behavior by monitoring the vehicle-mounted battery, so as to control the full life cycle of the battery.

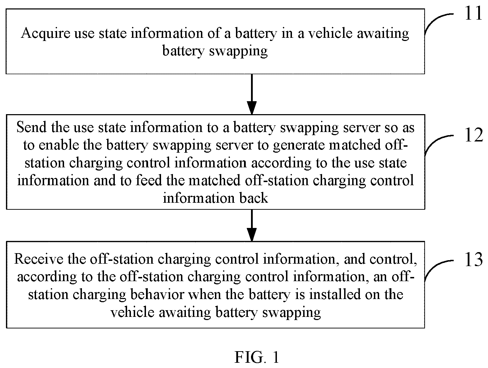

FIG. 1 shows an off-station charging control method of a vehicle awaiting battery swapping according to this embodiment, which comprises the following steps:

Step 11: acquiring use state information of a battery in the vehicle awaiting battery swapping.

In the step, the use state information may include relevant information that can be used as a basis for determining whether to permit the off-station charging, including but not limited to, a cumulative output electric energy value and a current output electric energy value of the battery, a cumulative input electric energy value and a current input electric energy value of the battery, a cumulative charging frequency of the battery, a cumulative output capacitance value and a current output capacitance value of the battery, a cumulative input capacitance value and a current input capacitance value of the battery, a cumulative driving mileage of the battery, a cumulative off-station slow charging frequency of the battery, a cumulative off-station fast charging frequency of the battery, a total cumulative off-station slow charging capacity, a total cumulative off-station slow charging energy, a total cumulative off-station fast charging capacity, a total cumulative off-station fast charging energy, and the like.

In the step, the use state information of the battery can be acquired from the battery swapping controller, the battery management system, the vehicle control unit, the battery swapping station end and the like, so as to control the off-station charging behavior.

Step 12: sending the use state information to a battery swapping server so as to enable the battery swapping server to generate matched off-station charging control information according to the use state information and to feed the matched off-station charging control information back.

In the step, the battery swapping server may be a traditional server or a cloud server capable of achieving off-station charging control. Specifically, the off-station charging control logic may be prestored in the battery swapping server, and the above-mentioned use state information is analyzed and processed to match with the corresponding off-station charging control logic, so as to generate information for determining whether to permit the off-station charging or other off-station charging control information. The functions of the battery swapping server are not limited to this, and functions of storing and managing the battery swapping information of the vehicle or the battery may also be included.

Step 13: receiving the off-station charging control information, and controlling, according to the off-station charging control information, an off-station charging behavior when the battery is installed on the vehicle awaiting battery swapping.

In the step, controlling the off-station charging behavior when the battery is installed on the vehicle awaiting battery swapping may comprise controlling an off-station charging behavior currently in progress, such as permitting or prohibiting the off-station charging behavior currently in progress; or may comprise controlling an off-station charging behavior that may occur in the future, such as permitting or prohibiting an off-station charging behavior for the next time or future times or for a future period of time; or may comprise both of controlling an off-station charging behavior currently in progress and controlling an off-station charging behavior that may occur in the future.

In this embodiment, the use state information of the battery is acquired, and the use state information is uploaded to the battery swapping server and the off-station charging control information is downloaded from the battery swapping server, so that the off-station charging behavior when the battery is installed on the vehicle awaiting battery swapping is controlled, thereby controlling the full life cycle of the battery, and prolonging the service life of the battery.

In an implementable manner, step 11 may specifically comprise: acquiring the use state information of the battery in the vehicle awaiting battery swapping according to a time cycle. In the step, the time cycle may be a preset value. For example, the use state information is acquired every five minutes. This embodiment is not limited to this, and the length of the time cycle may also be set as needed. The time cycle may be a fixed value, for example, the use state information of the battery in the vehicle awaiting battery swapping is acquired by using the same time cycle throughout the day; or may be a change value of one sub-period, for example, the use state information of the battery in the vehicle awaiting battery swapping is acquired by using a shorter time cycle in a charging peak period, and the use state information of the battery in the vehicle awaiting battery swapping is acquired by using a longer time cycle in a charging valley period.

Step 12 may specifically comprise: sending the use state information to the battery swapping server in real time so as to enable the battery swapping server, when continuously receiving changes in the use state information, to generate the matched off-station charging control information according to the latest received use state information and to feed the matched off-station charging control information back. The battery swapping server determines whether the off-station charging control information needs to be updated by comparing whether the continuously-received use state information changes, thereby timely and effectively controlling the off-station charging behavior.

In this embodiment, the use state information of the battery is periodically acquired and uploaded in real time, so that the off-station charging control information can be updated in time when there are changes in the use state information, thereby guaranteeing the timeliness and effectiveness of the off-station charging control information.

In an implementable manner, the use state information of the battery in the vehicle awaiting battery swapping may be acquired in each off-station charging process or after the charging is completed, and then the use state information is sent to the battery swapping server in real time.

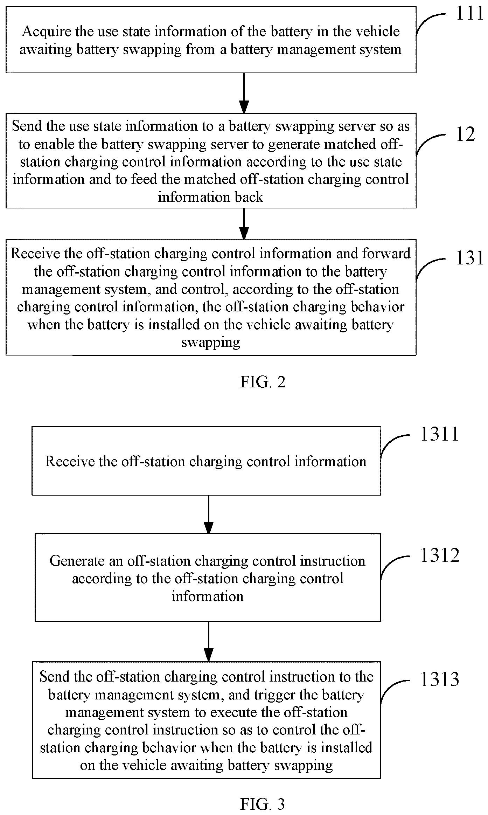

In an implementable manner, the off-station charging control method may be applied to a battery swapping controller. FIG. 2 shows an off-station charging control method of a vehicle awaiting battery swapping, and step 11 may specifically comprise:

Step 111: acquiring the use state information of the battery in the vehicle awaiting battery swapping from a battery management system. For example, the use state information of the battery in the vehicle awaiting battery swapping is acquired from the battery management system according to a time cycle.

Step 13 may specifically comprise:

Step 131: receiving the off-station charging control information and forwarding the off-station charging control information to the battery management system, and controlling, according to the off-station charging control information, the off-station charging behavior when the battery is installed on the vehicle awaiting battery swapping.

In this embodiment, the battery swapping controller can communicate with the battery management system and the battery swapping server, respectively, so as to further serve as a transfer device for information transmission between the battery management system and the battery swapping server, so that the uploading of the use state information from the battery management system to the battery swapping server and the issuing of the off-station charging control information from the battery swapping server to the battery management system are achieved. The method of this embodiment is particularly suitable for the situation that the battery management system cannot directly communicate with the battery swapping server, and the reason why the battery management system cannot directly communicate with the battery swapping server may be that the battery management system itself does not have the capability of communicating with the battery swapping server, or the battery management system has the capability of communicating with the battery swapping server but cannot communicate with the battery swapping server due to the failure of the communication module.

In an implementable manner, when an original vehicle-mounted apparatus of an electric vehicle releases the data interaction restriction, the off-station charging control method may be applied to the original vehicle-mounted apparatus, including but not limited to, a vehicle control unit. The original vehicle-mounted apparatus acquires the use state information of the battery in the vehicle awaiting battery swapping from the battery management system, reports the use state information to the battery swapping server, receives the off-station charging control information issued by the battery swapping server, forwards the off-station charging control information to the battery management system, and then controls the off-station charging behavior when the battery is installed on the vehicle awaiting battery swapping according to the off-station charging control information.

Furthermore, FIG. 3 shows a specific process of step 131, which may specifically comprise:

Step 1311: receiving the off-station charging control information;

Step 1312: generating an off-station charging control instruction according to the off-station charging control information; and

Step 1313: sending the off-station charging control instruction to the battery management system, and triggering the battery management system to execute the off-station charging control instruction so as to control the off-station charging behavior when the battery is installed on the vehicle awaiting battery swapping.

In this embodiment, the battery swapping controller and the battery swapping server perform data interaction through an agreed network communication protocol; the battery swapping controller, after receiving the off-station charging control information, converts the off-station charging control information into a battery management system-readable off-station control instruction and then sends the off-station control instruction to the battery management system so as to control the battery management system and thus to control the off-station charging behavior. Where the network communication protocol may be MQTT (Message Queuing Telemetry Transport), which is a "lightweight" communication protocol based on the publish/subscribe mode, and is constructed based on TCP/IP (Transmission Control Protocol/Internet Protocol). The advantage of using MQTT is that it can provide real-time and reliable message service for connecting remote devices with very little code and limited bandwidth. The battery swapping controller may send an off-station charging control instruction to the battery management system using the vehicle bus network.

Still furthermore, when the off-station charging control information comprises off-station charging permission information, step 1312 may specifically comprise: generating an off-station charging permission instruction and an off-station charging parameter setting instruction according to the off-station charging permission information. In the step, the off-station charging parameters may include, but are not limited to, a maximum charging current permitted for off-station charging, a total chargeable electric quantity of off-station charging, a chargeable frequency for off-station charging, etc. The off-station charging permission information may directly include indication information for permitting an off-station charging behavior and specific setting information of off-station charging parameters, and at this time, this step acquires corresponding indication information and specific setting information by analyzing the off-station charging permission information, and converts the corresponding indication information and the specific setting information into an off-station charging permission instruction and an off-station charging parameter setting instruction. The off-station charging permission information may also include indication information for permitting off-station charging, but does not include or only includes specific setting information of a part of the off-station charging parameters, and the specific setting information of all or the rest of the off-station charging parameters is prestored in the battery swapping controller: when the battery swapping controller receives the off-station charging control information, the battery swapping controller generates an off-station charging permission instruction according to the indication information for permitting off-station charging, and calls the specific setting information of all of the off-station charging parameters prestored therein, so as to generate an off-station charging parameter setting instruction. That is to say, the same default off-station charging parameters are used for each off-station charging behavior, and are prestored in the battery swapping controller, so that the effect of reducing the data volume transmitted between the battery swapping server and the battery swapping controller can be achieved; or, the specific setting information of part of the off-station charging parameters included in the off-station charging permission information is combined with the specific setting information of the rest of the off-station charging parameters called from the battery swapping controller, so as to generate a complete off-station charging parameter setting instruction. That is to say, part of the same default off-station charging parameters are used for each off-station charging behavior, while the rest of the off-station charging parameters are set by the battery swapping server according to actual conditions, and thus the effect of reducing the data volume transmitted between the battery swapping server and the battery swapping controller to a certain extent can be achieved by prestoring a part of the off-station charging parameters in the battery swapping controller, and the effect of improving the flexibility of setting can be achieved by setting the rest of the off-station charging parameters by the battery swapping server.

Step 1313 may specifically comprise: sending the off-station charging permission instruction and the off-station charging parameter setting instruction to the battery management system, so as to enable the battery management system to execute the off-station charging permission instruction to permit the off-station charging behavior when the battery is installed on the vehicle awaiting battery swapping, and to execute the off-station charging parameter setting instruction to control the off-station charging behavior. After receiving the off-station charging permission instruction, the battery management system regards the off-station charging behavior as a legal behavior, and controls the off-station charging behavior according to the off-station charging parameters. For example, the charging current for off-station charging cannot exceed the maximum permissible charging current, the total charging electric quantity of off-station charging cannot exceed the total chargeable electric quantity, the total off-station charging frequency cannot exceed the chargeable frequency for off-station charging, etc., and if any one of the above conditions is not met, the off-station charging behavior is prohibited.

In this embodiment, the off-station charging permission instruction and the off-station charging parameter setting instruction are generated and sent to the battery management system, so that the charging control of the battery management system is achieved, and the effective execution of the instructions is guaranteed.

When the off-station charging control information comprises off-station charging prohibition information, step 1312 may specifically comprise: generating an off-station charging prohibition instruction according to the off-station charging prohibition information. Step 1313 may specifically comprise: sending the off-station charging prohibition instruction to the battery management system so as to enable the battery management system to execute the off-station charging prohibition instruction to prohibit the off-station charging behavior when the battery is installed on the vehicle awaiting battery swapping. After receiving the off-station charging prohibition instruction, the battery management system regards the off-station charging behavior as an illegal behavior, and can prohibit the off-station charging behavior by turning off a battery charging switch, limiting the current input of the battery and the like.

In this embodiment, the off-station charging prohibition instruction is generated and sent to the battery management system, so that the charging control of the battery management system is achieved, and the effective execution of the instruction is guaranteed.

### Embodiment 2

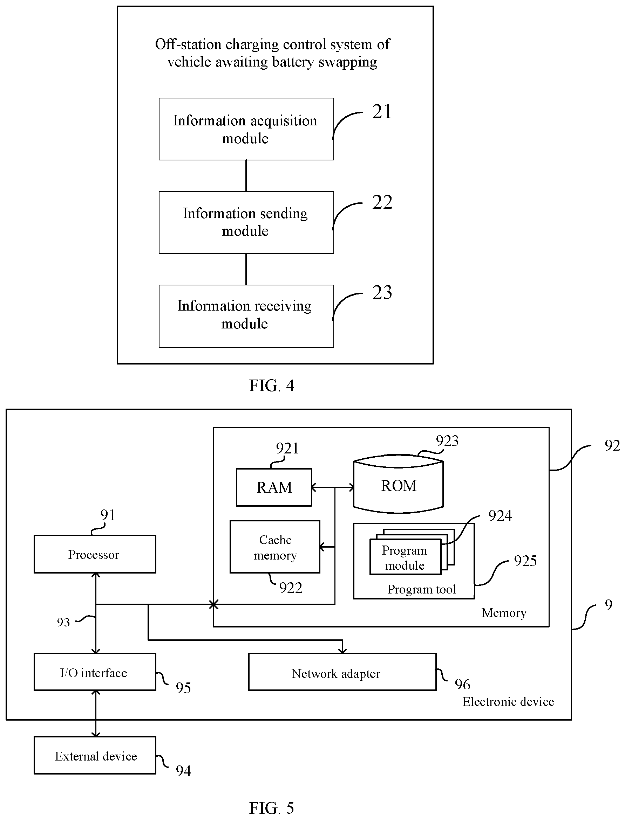

FIG. 4 shows an off-station charging control system of a vehicle awaiting battery swapping according to this embodiment, which comprises: an information acquisition module 21, an information sending module 22, and an information receiving module 23, wherein

the information acquisition module 21 is configured to acquire use state information of a battery in the vehicle awaiting battery swapping;

the information sending module 22 is configured to send the use state information to a battery swapping server so as to enable the battery swapping server to generate matched off-station charging control information according to the use state information and to feed the matched off-station charging control information back; and

the information receiving module 23 is configured to receive the off-station charging control information, and control, according to the off-station charging control information, an off-station charging behavior when the battery is installed on the vehicle awaiting battery swapping.

In an implementable manner, the information acquisition module 21 may be specifically configured to acquire the use state information of the battery in the vehicle awaiting battery swapping according to a time cycle. The information sending module 22 may be specifically configured to send the use state information to the battery swapping server in real time so as to enable the battery swapping server, when continuously receiving changes in the use state information, to generate the matched off-station charging control information according to the latest received use state information and to feed the matched off-station charging control information back.

In an implementable manner, the use state information of the battery in the vehicle awaiting battery swapping may be acquired in each off-station charging process or after the charging is completed, and then the use state information is sent to the battery swapping server in real time.

In an implementable manner, the off-station charging control system may be specifically applied to a battery swapping controller; the information acquisition module 21 may be specifically configured to acquire the use state information of the battery in the vehicle awaiting battery swapping from a battery management system; the information receiving module 23 may be specifically configured to receive the off-station charging control information and forward the off-station charging control information to the battery management system, and control, according to the off-station charging control information, the off-station charging behavior when the battery is installed on the vehicle awaiting battery swapping.

In an implementable manner, when an original vehicle-mounted apparatus of an electric vehicle releases the data interaction restriction, the off-station charging control system may be applied to the original vehicle-mounted apparatus, including but not limited to, a vehicle control unit. The original vehicle-mounted apparatus acquires the use state information of the battery in the vehicle awaiting battery swapping from the battery management system, reports the use state information to the battery swapping server, receives the off-station charging control information issued by the battery swapping server, forwards the off-station charging control information to the battery management system, and then controls the off-station charging behavior when the battery is installed on the vehicle awaiting battery swapping according to the off-station charging control information.

In an implementable manner, receiving the off-station charging control information and forwarding the off-station charging control information to the battery management system, and controlling, according to the off-station charging control information, the off-station charging behavior when the battery is installed on the vehicle awaiting battery swapping may specifically comprise: receiving the off-station charging control information; generating an off-station charging control instruction according to the off-station charging control information; and sending the off-station charging control instruction to the battery management system, and triggering the battery management system to execute the off-station charging control instruction so as to control the off-station charging behavior when the battery is installed on the vehicle awaiting battery swapping.

In an implementable manner, when the off-station charging control information comprises off-station charging permission information, generating an off-station charging control instruction according to the off-station charging control information may specifically comprise: generating an off-station charging permission instruction and an off-station charging parameter setting instruction according to the off-station charging permission information; sending the off-station charging control instruction to the battery management system, and triggering the battery management system to execute the off-station charging control instruction so as to control the off-station charging behavior when the battery is installed on the vehicle awaiting battery swapping may specifically comprise: sending the off-station charging permission instruction and the off-station charging parameter setting instruction to the battery management system, so as to enable the battery management system to execute the off-station charging permission instruction to permit the off-station charging behavior when the battery is installed on the vehicle awaiting battery swapping, and to execute the off-station charging parameter setting instruction to control the off-station charging behavior.

In an implementable manner, when the off-station charging control information comprises off-station charging prohibition information, generating an off-station charging control instruction according to the off-station charging control information may specifically comprise: generating an off-station charging prohibition instruction according to the off-station charging prohibition information; sending the off-station charging control instruction to the battery management system, and triggering the battery management system to execute the off-station charging control instruction so as to control the off-station charging behavior when the battery is installed on the vehicle awaiting battery swapping may specifically comprise: sending the off-station charging prohibition instruction to the battery management system so as to enable the battery management system to execute the off-station charging prohibition instruction to prohibit the off-station charging behavior when the battery is installed on the vehicle awaiting battery swapping.

### Embodiment 3

The embodiment of the present disclosure further provides an electronic device, which may be present in a form of a computing device (for example, may be a server device), and comprises a memory, a processor, and a computer program stored on the memory and executable on the processor, the processor, when executing the computer program, implementing the off-station charging control method of a vehicle awaiting battery swapping according to Embodiment 1 of the present disclosure.

In a preferable embodiment, the electronic device may be a battery swapping controller, and the battery swapping controller is accessed to a vehicle bus network of the vehicle awaiting battery swapping and communicates with a battery management system through the vehicle bus network.

In a preferred embodiment, the battery swapping controller integrates a wireless communication module, and communicates with the battery swapping server through the wireless communication module.

FIG. 5 shows a schematic structural diagram of hardware in this embodiment. As shown in FIG. 5, the electronic device 9 specifically comprises:
at least one processor 91, at least one memory 92, and a bus 93 for connecting different system components (comprising the processor 91 and the memory 92), wherein,
the bus 93 includes a data bus, an address bus, and a control bus.

The memory 92 includes a volatile memory, such as a random access memory (RAM) 921 and/or a cache memory 922, and may further include a read-only memory (ROM) 923.

The memory 92 further includes a program/utility 925 having a set (at least one) of program modules 924, such program modules 924 including, but not limited to: an operation system, one or more application programs, other program modules and program data, each of which or some combinations thereof may include an implementation of a network environment.

The processor 91 executes various functional applications and performs data processing, such as the off-station charging control method of a vehicle awaiting battery swapping according to Embodiment 1 of the present disclosure, by executing the computer program stored in the memory 92.

The electronic device 9 may further communicate with one or more external devices 94 (such as a keyboard and a pointing device). Such communication may be implemented through an input/output (I/O) interface 95. In addition, the electronic device 9 may also communicate with one or more networks (such as a local area network (LAN), a wide area network (WAN), and/or a public network, such as the Internet) via a network adapter 96. The network adapter 96 communicates with other modules of the electronic device 9 via the bus 93. It should be understood that although not shown in the figures, other hardware and/or software modules may be used in conjunction with the electronic device 9, including, but not limited to: microcode, device drivers, redundant processors, external disk drive arrays, RAID (disk array) systems, tape drivers, data backup storage systems, and the like.

It should be noted that although several units/modules or sub-units/modules of the electronic device are mentioned in the above detailed description, such a division is merely exemplary but not mandatory. Indeed, the features and functions of two or more of the units/modules described above may be embodied in one unit/module according to embodiments of the present application. Conversely, the features and functions of one unit/module described above may be further divided to be embodied by a plurality of units/modules.

### Embodiment 4

The embodiment of the present disclosure further provides a computer-readable storage medium having a computer program stored thereon, the program, when executed by a processor, implementing the steps of the off-station charging control method of a vehicle awaiting battery swapping according to Embodiment 1 of the present disclosure.

Where the readable storage medium may be employed more specifically and may include, but is not limited to: a portable disk, a hard disk, a random access memory, a read-only memory, an erasable programmable read-only memory, an optical storage device, a magnetic storage device, or any suitable combination of the foregoing.

In a possible implementation, the present disclosure may also be implemented in a form of a program product comprising program codes used for causing a terminal device to implement the steps of the off-station charging control method of a vehicle awaiting battery swapping according to Embodiment 1 of the present disclosure when the program product is executed on the terminal device.

Where the program codes used for implementing the present disclosure are written in any combination of one or more programming languages, and the program codes may be executed entirely on a user device, partly on the user device, as a stand-alone software package, partly on the user device and partly on a remote device, or entirely on the remote device.

Although specific embodiments of the present disclosure have been described above, it should be understood by those skilled in the art that these embodiments are merely illustrative and that the protection scope of the present disclosure is defined by the appended claims. Various changes or modifications may be made to these embodiments by those skilled in the art without departing from the principle and spirit of the present disclosure, and such changes and modifications shall fall within the protection scope of the present disclosure.

## Claims

1. An off-station charging control method of a vehicle awaiting battery swapping, comprising:
acquiring use state information of a battery in the vehicle awaiting battery swapping;
sending the use state information to a battery swapping server so as to enable the battery swapping server to generate matched off-station charging control information according to the use state information and to feed the matched off-station charging control information back; and
receiving the off-station charging control information, and controlling, according to the off-station charging control information, an off-station charging behavior when the battery is installed on the vehicle awaiting battery swapping.

2. The off-station charging control method of the vehicle awaiting battery swapping according to claim 1, wherein acquiring the use state information of the battery in the vehicle awaiting battery swapping comprises:
acquiring the use state information of the battery in the vehicle awaiting battery swapping according to a time cycle;
sending the use state information to the battery swapping server so as to enable the battery swapping server to generate the matched off-station charging control information according to the use state information and to feed the matched off-station charging control information back comprises:
sending the use state information to the battery swapping server in real time so as to enable the battery swapping server, when continuously receiving changes in the use state information, to generate the matched off-station charging control information according to the latest received use state information and to feed the matched off-station charging control information back.

3. The off-station charging control method of the vehicle awaiting battery swapping according to claim 1, wherein the off-station charging control method is applied to a battery swapping controller, and acquiring the use state information of the battery in the vehicle awaiting battery swapping comprises:
acquiring the use state information of the battery in the vehicle awaiting battery swapping from a battery management system;
receiving the off-station charging control information, and controlling, according to the off-station charging control information, the off-station charging behavior when the battery is installed on the vehicle awaiting battery swapping comprises:
receiving the off-station charging control information and forwarding the off-station charging control information to the battery management system, and controlling, according to the off-station charging control information, the off-station charging behavior when the battery is installed on the vehicle awaiting battery swapping.

4. The off-station charging control method of the vehicle awaiting battery swapping according to claim 3, wherein receiving the off-station charging control information and forwarding the off-station charging control information to the battery management system, and controlling, according to the off-station charging control information, the off-station charging behavior when the battery is installed on the vehicle awaiting battery swapping comprises:
receiving the off-station charging control information;
generating an off-station charging control instruction according to the off-station charging control information; and
sending the off-station charging control instruction to the battery management system, and triggering the battery management system to execute the off-station charging control instruction so as to control the off-station charging behavior when the battery is installed on the vehicle awaiting battery swapping.

5. The off-station charging control method of the vehicle awaiting battery swapping according to claim 4, wherein when the off-station charging control information comprises off-station charging permission information, generating the off-station charging control instruction according to the off-station charging control information comprises:
generating an off-station charging permission instruction and an off-station charging parameter setting instruction according to the off-station charging permission information;
sending the off-station charging control instruction to the battery management system, and triggering the battery management system to execute the off-station charging control instruction so as to control the off-station charging behavior when the battery is installed on the vehicle awaiting battery swapping comprises:
sending the off-station charging permission instruction and the off-station charging parameter setting instruction to the battery management system, so as to enable the battery management system to execute the off-station charging permission instruction to permit the off-station charging behavior when the battery is installed on the vehicle awaiting battery swapping, and to execute the off-station charging parameter setting instruction to control the off-station charging behavior.

6. The off-station charging control method of the vehicle awaiting battery swapping according to claim 4, wherein when the off-station charging control information comprises off-station charging prohibition information, generating the off-station charging control instruction according to the off-station charging control information comprises:
generating an off-station charging prohibition instruction according to the off-station charging prohibition information;
sending the off-station charging control instruction to the battery management system, and triggering the battery management system to execute the off-station charging control instruction so as to control the off-station charging behavior when the battery is installed on the vehicle awaiting battery swapping comprises:
sending the off-station charging prohibition instruction to the battery management system so as to enable the battery management system to execute the off-station charging prohibition instruction to prohibit the off-station charging behavior when the battery is installed on the vehicle awaiting battery swapping.

7. An off-station charging control system of a vehicle awaiting battery swapping, comprising:
an information acquisition module, configured to acquire use state information of a battery in the vehicle awaiting battery swapping;
an information sending module, configured to send the use state information to a battery swapping server so as to enable the battery swapping server to generate matched off-station charging control information according to the use state information and to feed the matched off-station charging control information back; and
an information receiving module, configured to receive the off-station charging control information, and control, according to the off-station charging control information, an off-station charging behavior when the battery is installed on the vehicle awaiting battery swapping.

8. An electronic device, comprising a memory, a processor and a computer program stored on the memory and executable on the processor, wherein the processor, when executing the computer program, implements the off-station charging control method of the vehicle awaiting battery swapping according to any one of claims 1 to 6.

9. The electronic device according to claim 8, wherein the electronic device is a battery swapping controller, and the battery swapping controller is accessed to a vehicle bus network of the vehicle awaiting battery swapping and communicates with a battery management system through the vehicle bus network.

10. The electronic device according to claim 9, wherein the battery swapping controller integrates a wireless communication module, and communicates with the battery swapping server through the wireless communication module.

11. A computer-readable storage medium having a computer program stored thereon, wherein the computer program, when executed by a processor, implements the steps of the off-station charging control method of the vehicle awaiting battery swapping according to any one of claims 1 to 6.
